# EUROPÄISCHE PATENTSCHRIFT

(11) **EP 1 840 394 B1**
(45) Veröffentlichungstag und Bekanntmachung des Hinweises auf die Patenterteilung: **30.12.2009**
(21) Anmeldenummer: 07006124.7
(22) Anmeldetag: 24.03.2007
(51) Int. Cl.: F16C 33/12, F16C 33/14, B32B 15/01, C25D 7/10

(54) **Gleitelement**
Sliding element
Elément de coulissement

(30) Priorität: 30.03.2006 AT 5512006
(43) Veröffentlichungstag der Anmeldung: 03.10.2007
(73) Patentinhaber: Miba Gleitlager GmbH, 4663 Laakirchen (AT)
(72) Erfinder: Rumpf, Thomas, Dr., 4810 Gmunden (AT)
(74) Vertreter: Burger, Hannes

(56) Entgegenhaltungen:
- DE-A1- 10 032 624
- DE-A1- 10 337 029
- DE-A1-102004 015 827
- DE-A1-102004 025 560
- GB-A- 2 396 191

## Beschreibung

Die Erfindung betrifft ein Gleitelement mit einem Stützelement und einer Gleitschicht, zwischen denen eine Lagermetallschicht angeordnet ist, wobei die Gleitschicht aus Bismut oder einer Bismutlegierung gebildet ist und wobei die Kristallite des Bismuts oder der Bismutlegierung in der Gleitschicht eine bevorzugte Richtung hinsichtlich ihrer Orientierung einnehmen, ausgedrückt durch den Miller-Index der Gitterebene (012), wobei die Röntgendiffraktionsintensität der Gitterebene (012) im Vergleich zu den Röntgendiffraktionsintensität der anderen Gitterebenen am größten ist, sowie ein Verfahren zu seiner Herstellung.

Gleitlager zeichnen sich unter anderem dadurch aus, dass sie eine relativ weiche Gleitschicht aufweisen, um damit eine Anpassung an das gelagerte Element, beispielsweise eine Welle, sowie eine gewisse Einbettfähigkeit für Fremdpartikel zu ermöglichen. Um diese tribologischen Eigenschaften zu erfüllen, wurden bislang im Stand der Technik hauptsächlich Gleitschichten vorgeschlagen, die Zinn oder Blei enthielten. Blei ist jedoch hinsichtlich seiner Toxizität unerwünscht und es wurde gerade in letzter Zeit vermehrt versucht Lösungen zu finden, das Blei zu eliminieren.

So wurde in der DE 100 32 624 A ein Gleitlager vorgeschlagen, welches ein Lagermetall und eine auf dem Lagermetall ausgebildete Laufschicht aus Bismut oder einer Bismutlegierung umfasst, wobei das nachstehend definierte relative Verhältnis der Röntgenstrahlbeugungsstärke I_{[hkl]} der Laufschicht aus Bismut oder der Bismutlegierung die folgenden Bedienungen (a) und (b) erfüllt:
(a) das relative Verhältnis der Röntgenstrahlbeugungsstärke I_{[hkl]} von anderen Ebenen als {012} ist 0,2 bis 5 Mal so hoch wie das Verhältnis der Röntgenstrahlbeugungsstärke I_{[012]}, d.h. 0,2 I_{[012]} ≤ I_{[hkl]} ≤ 5 I_{[012]};
(b) das relative Verhältnis der Röntgenstrahlbeugungsstärke I_{[hkl]} von drei oder mehr anderen Ebenen als {012} fällt in einen Bereich, der 0,5 bis 2 Mal so hoch ist wie das relative Verhältnis der Röntgenstrahlbeugungsstärke I_{[012]},d.h. 0,5 I_{[012]} ≤ I_{[hkl]} ≤ I_{[012]},
wobei die {hkl}-Ebenen von Bismutkristallen von Standardpulverproben, welche Zufallsorientierung aufweisen, die Röntgenstrahlbeugungsstärke Rₚ (hkl) anzeigen; {hkl}-Ebenen von Bismutkristallen der Laufschicht aus Bismut oder der Bismutlegierung die Röntgenstrahlbeugungsstärke R_{0/L} (hkl) anzeigen; Das Verhältnis der beiden Stärken K(hkl) = R_{0,L} (hkl)/Rₚ (hkl) ausgedrückt wird; Das Verhältnis von K(012) und K(hkl) durch I[hkl] = K (hkl)/K(012) ausgedrückt wird.

Des weiteren ist aus der DE 10 2004 015 827 A ein Gleitteil bekannt, umfassend eine Rückseitenmetallschicht, eine auf der Rückseitenmetallschicht vorhandene Gleitlegierungsschicht und eine auf der Gleitlegierungsschicht vorhandene Abdeckschicht, wobei die Abdeckschicht aus Bismut oder eine Bismutlegierung ausgebildet ist und wobei in einem Kristallgitter der Abdeckschicht einer mit dem Millerindex (202) bezeichnete Fläche einen Ausrichtungsgrad besitzt, welcher nicht kleiner als 30 % ist, und die Röntgendiffraktionsintensität R(₂₀₂) der (202)-Fläche einen Maximalwert im Vergleich zu anderen Flächen annimmt.

Es ist Aufgabe der vorliegenden Erfindung ein Gleitelement mit einer bleifreien Gleitschicht anzugeben.

Diese Aufgabe wird dadurch gelöst, dass bei dem eingangs genannten Gleitelement die Röntgendiffraktionsintensität der Gitterebene mit der zweitgrößten Röntgendiffraktionsintensität einen Wert von maximal 10 % der Röntgendiffraktionsintensität der Gitterebene (012) annimmt bzw. unabhängig dadurch, dass bei dem erfindungsgemäßen Verfahren die Gleitschicht entsprechend diesen Merkmalen hergestellt wird.

Überraschender Weise wurde festgestellt, dass ein Gleitelement mit der erfindungsgemäßen Gleitschicht aus Bismut bzw. der Bismutlegierung - entgegen der Auffassung, die in der DE 10 2004 015 827 A1 vertreten wird - mit derart ausgerichteten Bismut- bzw. Bismutlegierungskristalliten zumindest vergleichbare Eigenschaften zu jener Gleitschicht nach der DE 10 2004 015 827 A1 zeigt. Überraschend ist dieses Ergebnis auch im Hinblick auf die DE 100 32 624 A, wonach derartige Bismut-Gleitschichten nur geeignet sind, wenn die bevorzugte Orientierung nicht auf einige wenige bestimmte Ebenen beschränkt ist, wie dies nach der Erfindung der Fall ist.

Neben der Bleifreiheit liegt der Vorteil der erfindungsgemäßen Gleitschicht vor allem darin, dass diese einfach herzustellen ist. Diese starke Orientierung nach der (012)-Ebene wird beispielsweise durch galvanische Abscheidung erreicht. Es muss dabei beispielsweise nicht, wie nach der DE 10 2004 015 827 A1 vorgeschlagen, mit Umkehrperioden in einem bestimmten Schaltzyklus gearbeitet werden. Das erfindungsgemäße Gleitelement weist weiters eine verbesserte Verschleißbeständigkeit aufgrund der starken Orientierung der Kristallite auf.

Gemäß einer Ausführungsvariante ist vorgesehen, dass die Gitterebene mit der zweithöchsten Röntgendiffraktionsintensität jene mit dem Millerindex (024) ist. Es wird damit ein höherer Ausrichtungsgrad der Kristallite in der Gleitschicht erreicht, wodurch obige Eigenschaften weiter verbessert werden.

Die Summe der Röntgendiffraktionsintensitäten sämtlicher weiterer, zur Gitterebene (012) unterschiedlichen Gitterebenen nimmt bevorzugt einen Wert von maximal 25 % der Röntgendiffraktionsintensität der Gitterebene (012) an, wodurch ebenfalls ein höherer Ausrichtungsgrad erzielt wird.

Es ist weiters von Vorteil, wenn die Gleitschicht eine Härte nach Vickers aufweist, die ausgewählt ist aus einem Bereich mit einer unteren Grenze von 15 HV und einer oberen Grenze von 40 HV, wodurch die Verschleißbeständigkeit verbessert ist. Beispielsweise kann die Gleitschicht eine Härte von 20 HV oder 25 HV oder 30 HV oder 35 HV aufweisen.

Die Gleitschicht kann eine Schichtdicke aufweisen, ausgewählt aus einem Bereich mit einer unteren Grenze von 5 µm und einer oberen Grenze von 40 µm, um bessere Notlaufeigenschaften des Gleitelementes zu erreichen. Beispielsweise kann die Gleitschicht eine Schichtdicke von 10 µm oder 15 µm oder 20 µm oder 25 µm oder 30 µm oder 35 µm aufweisen.

Zum besseren Verständnis der Erfindung wird diese anhand der nachfolgenden Figur näher erläutert.

Es zeigt:
- Fig. 1: eine Darstellung des Röntgendiffraktionsmusters der Oberfläche der erfindungsgemäßen Gleitschicht aus Bi bei einer Stromdichte von 5 A/dm² (ASD) während der Abscheidung;
- Fig. 2: eine Darstellung des Röntgendiffraktionsmusters der Oberfläche der erfindungsgemäßen Gleitschicht aus Bi bei einer Stromdichte von 10 A/dm² (ASD) während der Abscheidung;
- Fig. 3: eine Darstellung des Röntgendiffraktionsmusters der Oberfläche der erfindungsgemäßen Gleitschicht aus Bi bei einer Stromdichte von 15 A/dm² (ASD) während der Abscheidung;
- Fig. 4: eine Darstellung des Röntgendiffraktionsmusters der Oberfläche der erfindungsgemäßen Gleitschicht aus einer Bi-Legierung mit 8 Gew.-% Sn.

Einführend sei festgehalten, dass in der Beschreibung gewählte Lageangaben, wie z.B. oben, unten, seitlich usw. auf die unmittelbar beschriebene Ausführung bezogen und bei einer Lageänderung sinngemäß auf die neue Lage zu übertragen sind. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Ein erfindungsgemäßen Gleitelement besteht, wie an sich bekannt, aus einem Stützelement, welches beispielsweise eine Stahlstützschale sein kann, einer darauf angeordneten Lagermetallschicht, sowie einer auf dieser angeordneten, erfindungsgemäßen Gleitschicht aus Bismut oder einer Bismutlegierung.

Die Lagermetallschicht kann jede bekannte Lagermetallschicht sein, beispielsweise eine Aluminium-Zinn-Legierung, eine Kupfer-Legierung, eine Aluminium-Legierung, etc.

Beispiele hierfür sind:
1. Lagermetalle auf Aluminiumbasis (nach DIN ISO 4381 bzw. 4383): AlSn6CuNi, AlSn20Cu, AlSi4Cd, AlCd3CuNi, A1Si11Cu, AlSn6Cu, AlSn40, AlSn25CuMn, AlSi11CuMgNi;
2. Lagermetalle auf Kupferbasis (nach DIN ISO 4383): CuSn10, CuA110Fe5Ni5, CuZn31Si1, CuPb24Sn2, CuSn8Bi10;
3. Lagermetalle auf Zinnbasis: SnSb8Cu4, SnSb12Cu6Pb.

Selbstverständlich können auch andere als die genannten Lagermetalle auf Aluminium-, Kupfer- oder Zinnbasis verwendet werden.

Die Gleitschicht ist, wie bereits erwähnt, aus der erfindungsgemäßen Schicht aus Bismut oder einer Bismutlegierung gebildet, wobei als Legierungspartner für Bismut vomämlich zumindest ein Element aus einer Kupfer, Silber, Zinn, Antimon und Indium umfassenden Gruppe in Betracht zu ziehen sind mit einem Mengenanteil von maximal 10 Gew.-%. Der Anteil des zumindest einen Legierungselementes kann aus einem Bereich ausgewählt sein mit einer unteren Grenze von 1 Gew.-% und einer oberen Grenze von 9 Gew.-% bzw. aus einem Bereich mit einer unteren Grenze von 3 Gew.-% und einer oberen Grenze von 7 Gew.-%. Es sind also beispielsweise Legierungen von Bismut mit zwei oder vier oder sechs oder acht Gew.-% von zumindest einem dieser Legierungspartner möglich. In einer bevorzugten Ausführungsvariante beträgt der Anteil an zulegierten Elementen in Summe maximal 10 Gew.-%. Es ist also beispielsweise möglich, dass die Legierung 3 Gew.-% Sn und 2 Gew.-% Sb oder 4 Gew.-% Sn und 2 Gew.-% In enthält. Auch andere Legierungszusammensetzungen in den Grenzen der angegebenen Bereiche sind möglich, solange voranstehende Bedingung der Orientierung der Kristallite erfüllt ist.

Neben der dreischichtigen Ausführung des Gleitelementes ist auch eine mehrschichtige möglich. Beispielsweise kann zwischen dem Stützelement und der Lagermetallschicht und/oder zwischen der Lagermetallschicht und der Gleitschicht ein Diffusionssperrschicht und/oder Bindeschicht angeordnet sein. Für derartige Schichten kommen z.B. Al, Mn, Ni, Fe, Cr, Co, Cu, Ag, Mo, Pd sowie NiSn- bzw. CuSn-Legierungen in Frage.

Als Gleitelement im Sinne der Erfindung wird jede Art von Gleitlagerung verstanden, wie z.B. ein Gleitlager, beispielsweise eine Gleitlagerhalbschale oder Vollschale in Form einer Buchse, ein Anlaufring, Lagerungen in der Antriebstechnik, z.B. von Pleuelstangen, Führungen oder dgl.

Es ist aber auch möglich, die erfindungsgemäße Gleitschicht direkt auf ein entsprechendes Element aufzutragen, d.h. eine direkte Beschichtung durchzuführen, sodass ein zusätzliches Bauteil für die Gleitlagerung nicht erforderlich ist. Dies ist beispielsweise bei Pleuelstangen möglich.

Die erfindungsgemäße Gleitschicht wurde galvanisch hergestellt, wobei das Bad folgende Zusammensetzung aufweist und die Beschichtung mit folgenden Parametern durchgeführt wurde.

### Beispiel 1: Badzusammensetzung für die galvanische Abscheidung:

50 g/l Bi als Methansulfonat
80 g/l Methansulfonsäure zur Verbesserung der Leitfähigkeit
Zusatz von Glättungsmittel und zumindest einem Tensid

### Betriebsdaten:

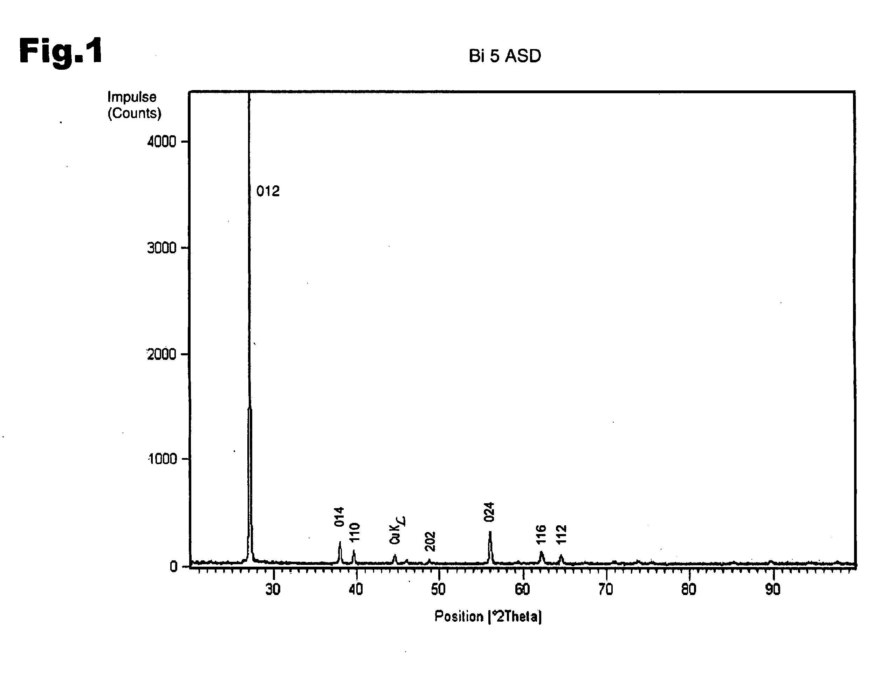

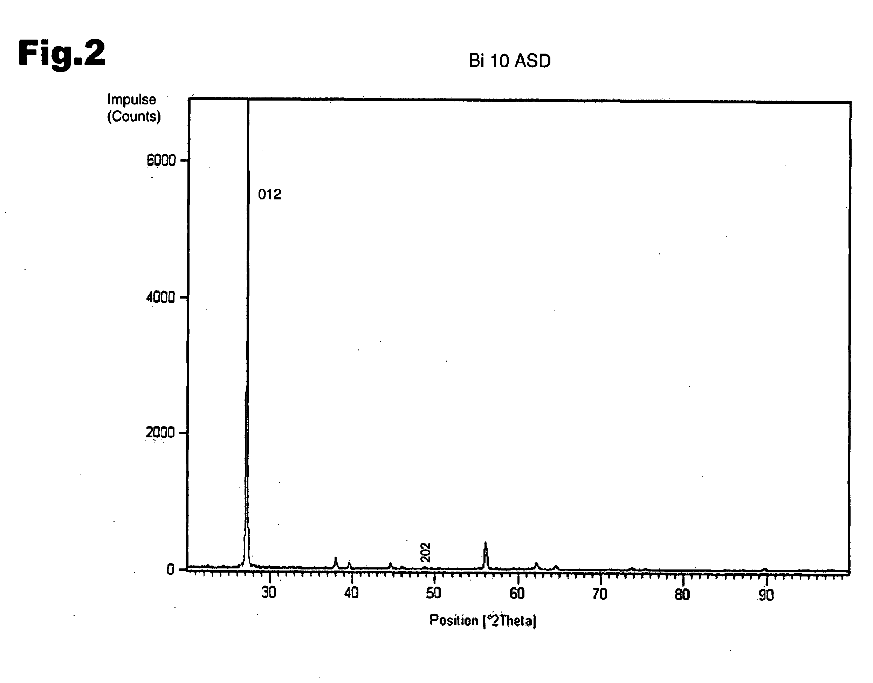

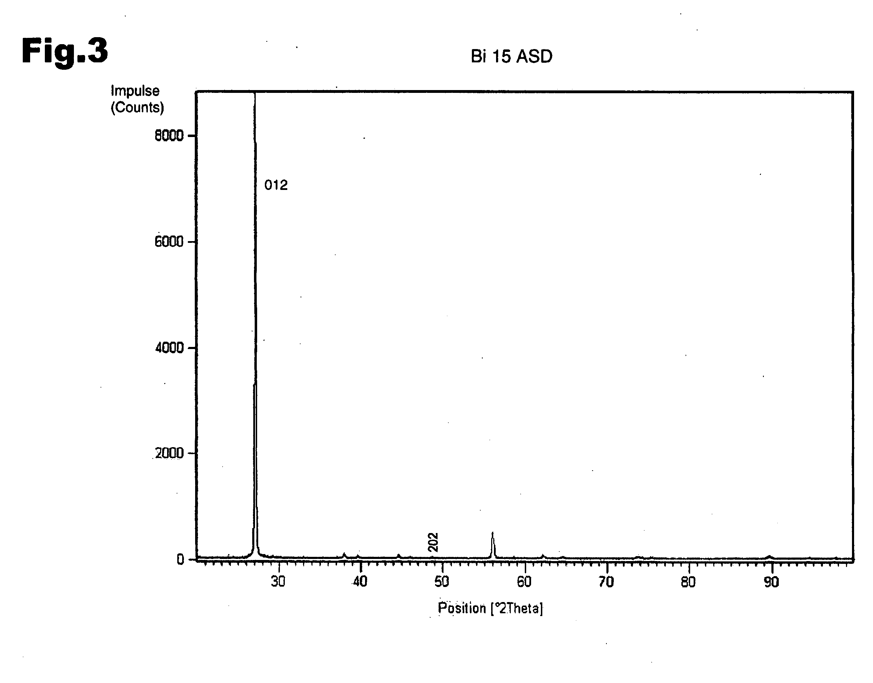

Raumtemperatur
Stromdichte: 5 A/dm² (Fig.1) bzw. 10 A/dm² (Fig. 2) bzw. 15 A/dm² (Fig. 3)

### Beispiel 2: Badzusammensetzung für die galvanische Abscheidung:

70 g/l Bi als Methansulfonat
50 g/l Methansulfonsäure zur Verbesserung der Leitfähigkeit
1g/l handelsübliches Tensid zur Verbesserung der Benetzbarkeit
0,5 g/l Schichtglättungszusatz ("Einebner")

### Betriebsdaten:

Raumtemperatur
Stromdichte: 5 A/dm²

Von den hergestellten Gleitschichten wurden in der Folge Röntgendiffraktionsdiagramme aufgenommen, welche in den Fig. 1 bis 3 dargestellt sind. Die entsprechenden Intensitäten zu Fig. 1 sind in Tabelle 1 dazu angegeben.

| Ebene | Intensität |
|---|---|
| 012 | 4561 |
| 014 | 223 |
| 110 | 161 |
| 202 | 82 |
| 024 | 339 |
| 116 | 178 |
| 112 | 125 |

Die Aufnahme entspricht einer Standardaufnahme, wobei auf der Abszisse die °2 Theta-Werte und auf der Ordinate die Impulse (Counts) aufgetragen sind. Die Aufnahme wurde mittels einer Kamera erstellt und wurde CuKα-Strahlung verwendet.

Wie aus dem Vergleich der drei Diagramme nach den Fig. 1 bis 3 ersichtlich ist, tritt mit Erhöhung der Stromdichte während der Abscheidung die 012 Ebene noch deutlicher in den Vordergrund, d.h. mit anderen Worten, dass sich durch die Erhöhung der Stromdichte der Ausrichtungsgrad in der Schicht weiter erhöht.

Das erfindungsgemäße Material, d.h. die Bismutschicht nach der Erfindung, gemäß diesem Ausführungsbeispiel, wurde jenen Gleitschichten, welche aus oben genannten Dokumenten zum Stand der Technik bekannt sind, gegenüber gestellt. Es wurde von sechs Gleitschichtmustern, wovon 5 reines Bismut und ein Muster aus einer Bismutlegierung mit 3 Gew.-% Zinn bestand, jeweils der Oberflächendruck bestimmt, ab dem es zu einem so genannten Festfressen der Welle kommt. Dieser beträgt bei den sechs Proben zwischen 95 MPa und 110 MPa, liegt also im Bereich jener Messwerte die in der DE 100 32 624 A geoffenbart sind. Im Vergleich zu Lagern entsprechend der DE 10 2004 015 827 A schnitten die erfindungsgemäßen Lager deutlich besser ab. Zur Messung wurde die in der DE 100 32 624 A genannte Methode verwendet. Die Dicke der Gleitschicht wurde jeweils mit 10 µm gewählt.

Von einer erfindungsgemäßen Bi-Gleitschicht wurde die Härte mit 17 UMHV 2p und von einer BiCu10-Gleitschi mit 30 UMHV 5p bestimmt. Hierbei steht UMHV für Ultramikrohärte Vickers bei 2 Pond bzw. 5 Pond Belastung.

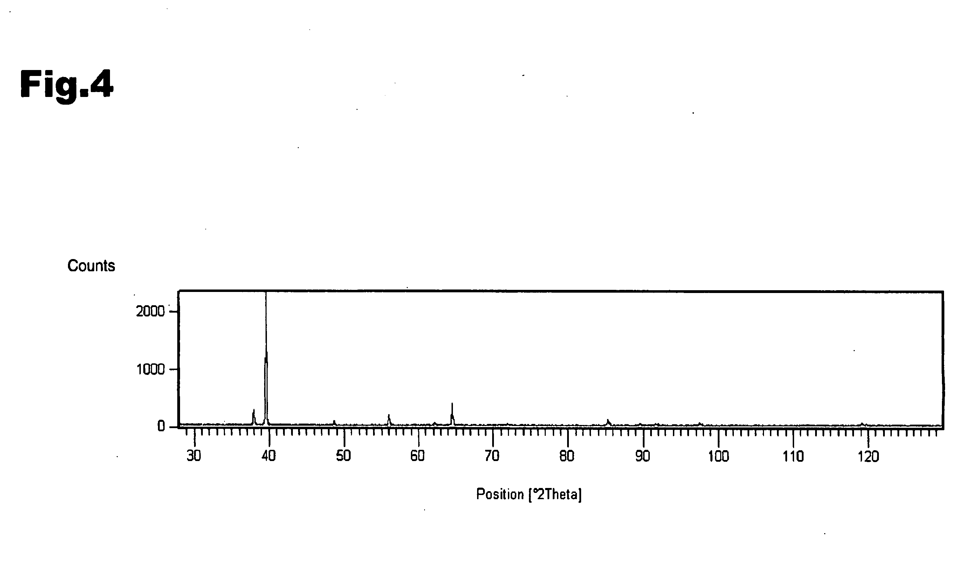

Schließlich zeigt Fig. 4 noch ein Bespiel für eine erfindungsgemäße Gleitschicht aus einer Bismutlegierung mit 8 Gew.-% Zinn. Auch hier ist deutlich die Ausrichtung in der Schicht nach der (012) Ebene zu erkennen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Das Ausführungsbeispiel beschreibt eine mögliche Ausführungsvariante des Gleitelements, wobei an dieser Stelle bemerkt sei, dass die Erfindung nicht auf die speziell dargestellte Ausführungsvariante eingeschränkt ist.

Die den eigenständigen erfinderischen Lösungen zugrunde liegende Aufgabe kann der Beschreibung entnommen werden.

## Patentansprüche

1. Gleitelement, insbesondere Gleitlager, mit einem Stützelement und einer Gleitschicht, zwischen denen eine Lagermetallschicht angeordnet ist, wobei die Gleitschicht aus Bismut oder einer Bismutlegierung gebildet ist und wobei die Kristallite des Bismuts oder der Bismutlegierung in der Gleitschicht eine bevorzugte Richtung hinsichtlich ihrer Orientierung einnehmen, ausgedrückt durch den Miller-Index der Gitterebene (012), wobei die Röntgendiffraktionsintensität der Gitterebene (012) im Vergleich zu den Röntgendiffraktionsintensitäten der anderen Gitterebenen am größten ist, **dadurch gekennzeichnet, dass** die Röntgendiffraktionsintensität der Gitterebene mit der zweitgrößten Röntgendiffraktionsintensität einen Wert von maximal 10 % der Röntgendiffraktionsintensität der Gitterebene (012) annimmt.

2. Gleitelement nach Anspruch 1, **dadurch gekennzeichnet, dass** die Gitterebene mit der zweithöchsten Röntgendiffraktionsintensität jene mit dem Miller-Index (024) ist.

3. Gleitelement nach Anspruch 1 oder 2, **dadurch gekennzeichnet, dass** die Summe der Röntgendiffraktionsintensitäten sämtlicher weiteren zur Gitterebene (012) unterschiedlichen Gitterebenen einen Wert von maximal 25 % der Röntgendiffraktionsintensität der Gitterebene (012) annimmt.

4. Gleitelement nach einem der Ansprüche 1 bis 3, **dadurch gekennzeichnet, dass** die Gleitschicht eine Härte nach Vickers aufweist, ausgewählt aus einem Bereich mit einer unteren Grenze von 15 HV und einer oberen Grenze von 40 HV.

5. Gleitelement nach einem der Ansprüche 1 bis 4, **dadurch gekennzeichnet, dass** die Gleitschicht eine Schichtdicke aufweist, ausgewählt aus einem Bereich mit einer unteren Grenze von 5 µm und einer oberen Grenze von 40 µm.

6. Verfahren zur Herstellung eines Gleitelementes zumindest umfassend eine Stützschicht, eine Lagermetallschicht und eine Gleitschicht, nach dem auf dem Stützelement die Lagermetallschicht, gegebenenfalls unter Zwischenanordnung einer Bindeschicht, und auf der Lagermetallschicht die Gleitschicht, gegebenenfalls unter Zwischenanordnung einer Bindeschicht, angeordnet wird, wobei die Gleitschicht galvanisch aus methansulfonsaurer Lösung eines Bismutsalzes auf der Lagermetallschicht oder der Bindeschicht niedergeschlagen wird, **dadurch gekennzeichnet, dass** die Gleitschicht entsprechend den Merkmalen der Gleitschicht der Ansprüche 1 bis 5 hergestellt wird.

## Claims

1. Sliding element, in particular a sliding bearing, with a support element and a sliding layer, between which a bearing metal layer is arranged, which sliding layer is made from bismuth or a bismuth alloy, and the crystallites of the bismuth or bismuth alloy in the sliding layer adopt a preferred direction with respect to their orientation, expressed by the Miller index of the lattice plane (012), and the X-ray diffraction intensity of the lattice plane (012) is the highest compared with the X-ray diffraction intensities of other lattice planes, **characterised in that** the X-ray diffraction intensity of the lattice plane with second largest X-ray diffraction intensity is a maximum of 10 % of the X-ray diffraction intensity of the lattice plane (012).

2. Sliding element as claimed in claim 1, **characterised in that** the lattice plane with the second-highest X-ray diffraction intensity is the one with the Miller index (024).

3. Sliding element as claimed in claim 1 or 2, **characterised in that** the sum of the X-ray diffraction intensities of all other lattice planes different from lattice plane (012) assumes a value of at most of 25% of the X-ray diffraction intensity of the lattice plane (012).

4. Sliding element as claimed in one of claims 1 to 3, **characterised in that** the sliding layer has a Vickers hardness selected from a range with a lower limit of 15 HV and an upper limit of 40 HV.

5. Sliding element as claimed in one of claims 1 to 4, **characterised in that** the sliding layer has a layer thickness selected from a range with a lower limit of 5 µm and an upper limit of 40 µm.

6. Method of producing a sliding element comprising at least one support layer, a bearing metal layer and a sliding layer, whereby the bearing metal layer is disposed on the support element, if necessary with a bonding layer disposed in between, and the sliding layer is disposed on the bearing metal layer, if necessary with a bonding layer disposed in between, and the sliding layer is galvanically precipitated onto the bearing metal layer or bonding layer from a methane sulphonic acid solution of a bismuth salt, **characterized in that** the sliding layer produced has the characterising features of the sliding layer as claimed in one of claims 1 to 5.

## Revendications

1. Elément de coulissement, en particulier palier de coulissement, avec un élément de support et une couche coulissante, entre lesquels est disposée une couche métallique de palier, où la couche coulissante est réalisée en bismuth ou en un alliage de bismuth et où les cristaux du bismuth ou de l'alliage de bismuth occupent dans la couche coulissante une direction préférée concernant leur orientation, exprimée par l'indice de Miller du plan de grille (012), où l'intensité de diffraction des rayons X du plan de grille (012) en comparaison aux intensités de diffraction par rayons X des autres plans de grille est la plus grande, **caractérisé en ce que** l'intensité de diffraction des rayons X du plan de grille avec la deuxième intensité de diffraction des rayons X la plus grande prend une valeur au maximum de 10% de l'intensité de diffraction des rayons X du plan de grille (012).

2. Elément de coulissement selon la revendication 1, **caractérisé en ce que** le plan de grille avec la deuxième intensité de diffraction des rayons X la plus grande est celui avec l'indice de Miller (024).

3. Elément de coulissement selon la revendication 1 ou 2, **caractérisé en ce que** la somme des intensités de diffraction des rayons X de tous les autres plans de grille différents du plan de grille (012) prend une valeur au maximum de 25% de l'intensité de diffraction des rayons X du plan de grille (012).

4. Elément de coulissement selon l'une des revendications 1 à 3, **caractérisé en ce que** la couche de coulissement présente une dureté selon Vickers, sélectionnée d'une plage ayant une limite inférieure de 15 HV et une limite supérieure de 40 HV.

5. Elément de coulissement selon l'une des revendications 1 à 4, **caractérisé en ce que** la couche de coulissement présente une épaisseur de couche, sélectionnée dans une plage ayant une limite inférieure de 5 µm et une limite supérieure de 40 µm.

6. Procédé de fabrication d'un élément de coulissement comprenant au moins une couche de support, une couche métallique de palier et une couche coulissante, selon lequel est disposé sur l'élément de support la couche métallique de palier, le cas échéant en intercalant une couche de liaison et sur la couche métallique de palier la couche coulissante, le cas échéant en intercalant une couche de liaison, où la couche coulissante est déposée galvaniquement à partir d'une solution d'acide méthanesulfonique d'un sel de bismuth sur la couche métallique de palier ou la couche de liaison, **caractérisé en ce que** la couche coulissante est fabriquée selon les caractéristiques de la couche coulissante des revendications 1 à 5.
